# EUROPEAN PATENT APPLICATION

(11) **EP 3 051 126 A1**
(43) Date of publication of application: **03.08.2016**
(21) Application number: 14848181.5
(22) Date of filing: 22.09.2014
(51) Int. Cl.: F03D 7/00, F03D 1/06

(54) **MONITORING SYSTEM AND MONITORING METHOD**

(30) Priority: 24.09.2013 JP 2013196814
(71) Applicant: NTN Corporation, Osaka-shi, Osaka 550-0003 (JP)
(72) Inventor: IKEDA, Hiroshi, Kuwana-shi Mie 511-0811 (JP); HASEBA, Takashi, Kuwana-shi Mie 511-0811 (JP); TAKEUCHI, Akitoshi, Kuwana-shi Mie 511-0811 (JP)
(74) Representative: Bockhorni & Kollegen
(86) International application number: PCT/JP2014/075036
(87) International publication number: WO 2015/046129

(57) **Abstract**

Provided is a monitoring system for monitoring states of apparatuses of a wind turbine which achieves further cost reduction. The monitoring system for the wind turbine includes: microphones (90, 91) arranged inside a nacelle (30) holding a main shaft (50), a gearbox (60), a power generator (70), and a main bearing (80) of the wind turbine (10) therein to obtain acoustic data; a data collection device (92) (data collection unit) which collects the data and transfers the data to a server (101) on the Internet (102); the server (101) (comparison and diagnosis unit) which saves, compares, and diagnoses the transferred data; and a monitoring terminal (100) (display monitoring unit) which displays and monitors the result of diagnosis.

## Description

### TECHNICAL FIELD

The present invention relates to a monitoring system and a monitoring method, and more particularly to a monitoring system for a wind turbine including apparatuses to be monitored, and a monitoring method using the monitoring system for the wind turbine.

### BACKGROUND ART

In a wind turbine, its operating state and deteriorated and damaged states of its apparatuses are monitored from a remote location by an operating monitoring device (Supervisory Control And Data Acquisition: SCADA) and a state monitoring system (Condition Monitoring System: CMS). SCADA collects operating information such as the rotation speed, the wind velocity, or the power generation amount of a wind mill, for example, and CMS monitors deteriorated and damaged states of an apparatus such as blades, a main bearing, a gearbox, or a power generator of the wind mill, for example. As an example of monitoring of the state of such an apparatus, for example, Japanese Patent Laying-Open No. 2005-17128 (hereinafter referred to as PTD 1) proposes a method for monitoring the state of mechanical equipment such as railroad vehicle equipment.

### CITATION LIST

### PATENT DOCUMENT

PTD 1: Japanese Patent Laying-Open No. 2005-17128

### SUMMARY OF INVENTION

### TECHNICAL PROBLEM

In a conventional condition monitoring system (CMS) for a wind turbine, deteriorated and damaged states of apparatuses are monitored mainly using vibration sensors. Accordingly, it is conventionally necessary to arrange a sensor in proximity to each apparatus to be monitored. Therefore, it is necessary to arrange many sensors, which results in an increase in device cost.

Further, in the wind turbine, the operating condition changes constantly, for example, the rotation speed of a main shaft changes according to the wind velocity, and a nacelle rotates according to the wind direction. Therefore, such a change in the operating condition may act as a noise in monitoring the states of the apparatuses. As a result, it is difficult to make a highly accurate diagnosis of the apparatuses.

The present invention has been made in view of the aforementioned problems, and an object of the present invention is to provide a monitoring system which achieves further cost reduction and a monitoring method using the monitoring system.

### SOLUTION TO PROBLEM

A monitoring system in accordance with the present invention is a monitoring system for monitoring states of apparatuses of a wind turbine. The monitoring system includes: a detection unit arranged inside a housing holding the apparatuses therein to obtain sound information; a data collection unit which collects the sound information obtained by the detection unit, and transfers the sound information to a server on the Internet; a comparison and analysis unit (comparison and diagnosis unit) which saves the sound information transferred from the data collection unit in the server on the Internet, performs comparison with a reference value (threshold) and analysis based on the sound information, and makes diagnosis; and a monitor terminal which displays and monitors a result of the comparison and analysis (result of the diagnosis) by the comparison and analysis unit.

In the monitoring system in accordance with the present invention, the sound information produced by operation of the apparatuses arranged inside the housing of the wind turbine can be obtained by the detection unit. Then, the data collection unit collects the obtained sound information and transfers the sound information to the server on the Internet. The transferred sound information is saved in the server, compared with the reference value (threshold value), and diagnosed. The result of the diagnosis is displayed and monitored by the monitor terminal provided outside the wind turbine. Thereby, damaged and deteriorated states of the apparatuses can be diagnosed at a location remote from the housing, based on the sound information obtained by the detection unit. Further, by using the detection unit, information produced by the operation of the apparatuses can be obtained in a wider range, when compared with a conventional vibration sensor. Therefore, the number of detection units to be arranged inside the housing can be further reduced, and as a result, the cost of the monitoring system can be further reduced. Thus, according to the monitoring system in accordance with the present invention, a monitoring system which achieves further cost reduction can be provided.

In the monitoring system described above, the wind turbine may include a main shaft rotated by wind power, a gearbox connected to the main shaft, a main bearing arranged adjacent to the gearbox to support the main shaft, and a power generator connected to the gearbox on a side opposite to the main bearing. Further, the detection unit may include a first detection unit arranged between the main bearing and the gearbox, and a second detection unit arranged between the gearbox and the power generator.

Thereby, the number of detection units to be arranged inside the housing can be further reduced. As a result, the cost of the monitoring system can be further reduced.

In the monitoring system described above, the detection unit may include a sound collection unit which has directivity, and is movable such that a direction in which the directivity is high can be changed with respect to the apparatuses, to obtain the sound information.

Thereby, the number of detection units to be arranged inside the housing can be still further reduced. Further, the direction of the sound collection unit with respect to the apparatuses can be associated with the obtained sound information, and as a result, deteriorated and damaged states of the apparatuses can be diagnosed more reliably.

In the monitoring system described above, the wind turbine may have a rated output higher than 500 kW. Thus, the monitoring system can be suitably used for monitoring the apparatuses of the wind turbine having a high rated output.

A monitoring method in accordance with the present invention is a monitoring method for monitoring states of apparatuses of a wind turbine. The monitoring method includes the steps of: determining a reference operating condition which is an operating condition serving as a reference in the wind turbine; obtaining sound information based on operation of the apparatuses when normal, by a detection unit arranged inside a housing holding the apparatuses therein, and determining a reference value of the sound information, under the reference operating condition; and obtaining another sound information based on operation of the apparatuses when the wind turbine is operating, by the detection unit, and, in a case where an operating condition of the wind turbine is the reference operating condition, comparing the other sound information with the reference value and diagnosing the states of the apparatuses.

In the monitoring method in accordance with the present invention, the reference operating condition of the wind turbine is determined first, the reference value of the sound information produced by the operation of the apparatuses is determined under the reference operating condition, and the sound information obtained in the case where the operating condition of the wind turbine is the reference operating condition is compared with the reference value. Thereby, the sound information produced by the operation of the apparatuses can be compared, with the operating condition of the wind turbine being kept constant. Therefore, even when the sound information produced by the operation of the apparatuses is obtained by the detection unit in a wide range, it is possible to suppress a change in the operating condition of the wind turbine from acting as a noise in diagnosing the states of the apparatuses. As a result, the states of the apparatuses can be diagnosed with higher accuracy. Therefore, according to the monitoring method in accordance with the present invention, the states of the apparatuses of the wind turbine can be diagnosed with higher accuracy.

### ADVANTAGEOUS EFFECTS OF INVENTION

As is clear from the above description, according to the monitoring system in accordance with the present invention, a monitoring system which achieves further cost reduction can be provided. In addition, according to the monitoring method in accordance with the present invention, the states of the apparatuses of the wind turbine can be diagnosed with higher accuracy.

### BRIEF DESCRIPTION OF DRAWINGS

Fig. 1 is a schematic view showing a configuration of portions of a wind turbine and a monitoring system for the wind turbine in accordance with a first embodiment.
Fig. 2 is a schematic view showing a configuration of a portion of the monitoring system for the wind turbine in accordance with the first embodiment.
Fig. 3 is a flowchart schematically showing a monitoring method in accordance with the first embodiment.
Fig. 4 is a schematic view showing a configuration of a portion of a monitoring system for a wind turbine in accordance with a second embodiment.

### DESCRIPTION OF EMBODIMENTS

Hereinafter, embodiments of the present invention will be described with reference to the drawings. It should be noted that, in the drawings below, identical or corresponding parts will be designated by the same reference numerals, and the description thereof will not be repeated.

### (First Embodiment)

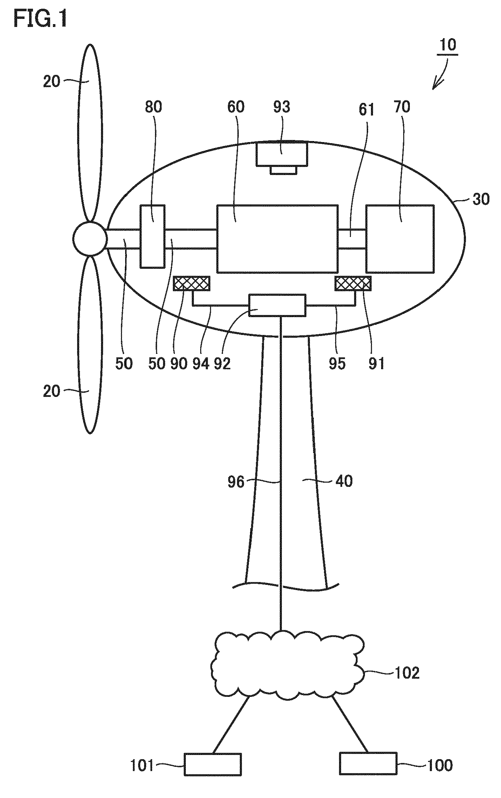

First of all, a first embodiment as one embodiment of the present invention will be described. First, a configuration of a wind turbine in accordance with the present embodiment will be described. Referring to Fig. 1, a wind turbine 10 in accordance with the present embodiment mainly includes blades 20, a nacelle 30 (housing), a support column 40, a main shaft 50, a gearbox 60, a power generator 70, and a main bearing 80.

Inside nacelle 30, apparatuses (main shaft 50, gearbox 60, power generator 70, and main bearing 80) of wind turbine 10, microphones 90, 91 (detection unit), a data collection device 92 (data collection unit), and a camera 93 are mainly arranged. Acoustic data (sound information) based on operation of the apparatuses of wind turbine 10 can be obtained by microphones 90, 91. Further, image data of the apparatuses arranged inside nacelle 30 can be obtained by camera 93. Microphones 90, 91 and data collection device 92 constitute a monitoring system for the wind turbine in accordance with the present embodiment described later.

Nacelle 30 is arranged at the top of support column 40 (that is, at a high position) installed on the ground (not shown). Nacelle 30 is rotatable about the axis of support column 40. Blades 20 are connected to one end of main shaft 50 protruding out of nacelle 30. Main shaft 50 is arranged inside nacelle 30, and is rotatable by wind power received by blades 20.

Gearbox 60 is connected to main shaft 50 at the other end opposite to the one end to which blades 20 are connected. Gearbox 60 accelerates rotation of main shaft 50, and outputs the accelerated rotation of main shaft 50 to power generator 70 via an output shaft 61. Gearbox 60 is constituted of a gear acceleration mechanism including a planetary gear or an intermediate shaft, a high-speed shaft, and the like, for example.

Power generator 70 is connected to gearbox 60 on a side opposite to main bearing 80. Power generator 70 is connected to gearbox 60 via output shaft 61, and generates electric power by the rotation output from gearbox 60. Power generator 70 is an induction generator, for example.

Main bearing 80 is arranged adjacent to gearbox 60, and supports main shaft 50 to be rotatable about the axis thereof. Main bearing 80 is a rolling bearing, for example, such as a self-aligning roller bearing, a conical roller bearing, a cylindrical roller bearing, or a ball bearing. Further, such a bearing may be a single-row or multi-row bearing.

Although the rated output of wind turbine 10 is not particularly limited, it is higher than 500 kW, for example.

Next, operation of the wind turbine in accordance with the present embodiment will be described. Referring to Fig. 1, first, blades 20 receive wind power and rotate, and thereby main shaft 50 connected to blades 20 is rotated while being supported by main bearing 80. The rotation of main shaft 50 is transmitted to gearbox 60 and accelerated, and is converted into rotation of output shaft 61. Then, the rotation of output shaft 61 is transmitted to power generator 70, and electromotive force is generated in power generator 70 by an electromagnetic induction action. Thereby, the wind turbine operates.

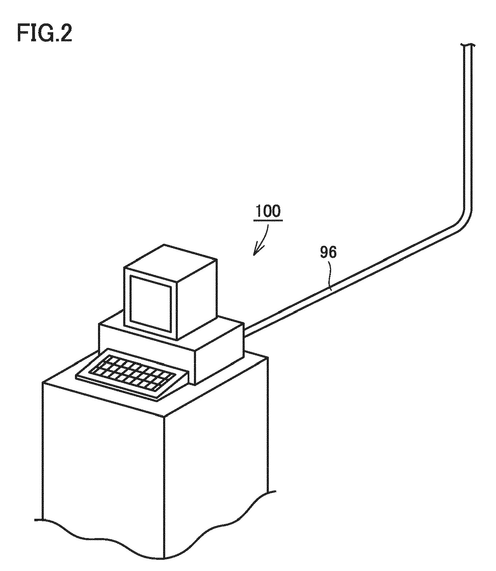

Next, a configuration of the monitoring system for the wind turbine in accordance with the present embodiment will be described. Referring to Figs. 1 and 2, the monitoring system for the wind turbine in accordance with the present embodiment is a device for monitoring damaged and deteriorated states of the apparatuses (main shaft 50, gearbox 60, power generator 70, and main bearing 80) of wind turbine 10.

The monitoring system for the wind turbine mainly includes microphones 90, 91 and data collection device 92 arranged inside nacelle 30 (Fig. 1), a server 101 (comparison and analysis unit) on Internet 102 which saves sound information transferred from data collection device 92, compares the sound information with a reference value (threshold value) and makes diagnosis, and a monitoring terminal 100 (monitor terminal) connected with server 101 to display and monitor the result of the diagnosis by server 101.

Referring to Fig. 1, microphones 90, 91 are devices for obtaining the acoustic data produced by the operation of the apparatuses of wind turbine 10. As shown in Fig. 1, microphone 90 (a first detection unit) is arranged to face an outer peripheral surface of main shaft 50 between main bearing 80 and gearbox 60. Microphone 90 is arranged among main shaft 50, gearbox 60, and main bearing 80. With the arrangement described above, microphone 90 can obtain acoustic data mainly produced by rotating operation of main shaft 50, main bearing 80, and gearbox 60.

As shown in Fig. 1, microphone 91 (a second detection unit) is arranged between gearbox 60 and power generator 70. With the arrangement described above, microphone 91 can obtain acoustic data mainly produced by operation of gearbox 60 and power generator 70.

Microphones 90, 91 may be those having omnidirectivity (non-directivity), or may be those having directivity. Further, although the present embodiment has described the case where the number of microphones installed is two, the present embodiment is not limited thereto, and it is only necessary that a plurality of microphones (detection units) are installed. Furthermore, each of the plurality of microphones is preferably arranged inside nacelle 30 to be in proximity to each of blades 20, main bearing 80, gearbox 60, and power generator 70 while being spaced therefrom. In addition, the acoustic data obtained by microphones 90, 91 are a time-series signal of sound pressure, an effective value of sound pressure, and the like.

Data collection device 92 is a device for collecting the acoustic data obtained by microphones 90, 91, and transferring the data to server 101 on Internet 102. Data collection device 92 is connected to microphones 90, 91 via cables 94, 95. Thereby, data collection device 92 can receive the acoustic data obtained by microphones 90, 91.

Data collection device 92 can also receive signals based on an operating condition which indicate the rotation speeds of main shaft 50, gearbox 60, and power generator 70, the power generation amount of power generator 70, the yaw rotation speed of nacelle 30, wind velocity, and the like. Further, data collection device 92 transfers the data to server 101 on Internet 102, and monitoring terminal 100 (Fig. 2) is connected to server 101 on Internet 102.

Referring to Figs. 1 and 2, monitoring terminal 100 is a device for displaying and monitoring the result of analysis by server 101 on the acoustic data produced by the operation of the apparatuses of wind turbine 10 obtained by microphones 90, 91. Monitoring terminal 100 is connected with server 101 on Internet 102. Thereby, monitoring terminal 100 arranged outside nacelle 30 can receive the acoustic data obtained by microphones 90, 91 and collected by data collection device 92. Further, monitoring terminal 100 is also connected with data collection device 92 as well as with microphones 90, 91, and image data is saved in server 101 on Internet 102 and the data can be checked at monitoring terminal 100.

As described above, in the monitoring system for the wind turbine in accordance with the present embodiment, the acoustic data produced by the operation of the apparatuses (main shaft 50, gearbox 60, power generator 70, and main bearing 80) arranged inside nacelle 30 of wind turbine 10 can be obtained by microphones 90, 91, and can be input to data collection device 92. Those data are saved in server 101 on Internet 102, compared with the threshold value, and diagnosed. The result of the diagnosis thereof can be displayed and monitored at monitoring terminal 100. Thereby, damaged and deteriorated states of the apparatuses can be diagnosed on the ground, based on the acoustic data obtained by microphones 90, 91. Further, by using microphones 90, 91, operation information of the apparatuses can be obtained in a wider range, when compared with vibration sensors. Therefore, the number of sensors to be arranged inside nacelle 30 can be further reduced, and as a result, the cost of the monitoring system can be further reduced. Furthermore, the number of processes required to mount and wire sensors can also be further reduced. In addition, when a vibration sensor is used, it is necessary to remove the paint from the surface of an apparatus to be monitored to ensure a flat surface for mounting the vibration sensor, and perform screw hole machining or the like. However, this can also be avoided by substituting microphones 90, 91 for vibration sensors. Thus, the monitoring system for the wind turbine in accordance with the present embodiment is configured as a monitoring system which achieves further cost reduction.

The monitoring system for the wind turbine may include microphone 90 arranged between main bearing 80 and gearbox 60, and microphone 91 arranged between gearbox 60 and power generator 70. With the arrangement described above, the acoustic data produced by the operation of the apparatuses of wind turbine 10 can be obtained by a less number of sensors. As a result, the cost of the monitoring system can be further reduced.

Next, a monitoring method in accordance with the present embodiment will be described. The monitoring method in accordance with the present embodiment is a method for monitoring damaged and deteriorated states of the apparatuses (main shaft 50, gearbox 60, power generator 70, and main bearing 80) of wind turbine 10, and is performed using the monitoring system for the wind turbine in accordance with the present embodiment.

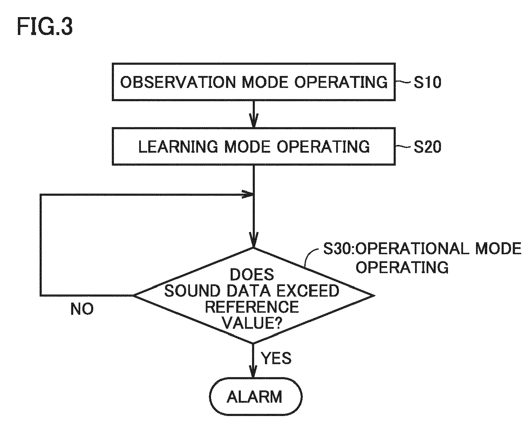

Referring to Fig. 3, first, observation mode operating is performed as step (S10). In this step (S10), referring to Fig. 1, an operating condition serving as a reference in monitoring the apparatuses of wind turbine 10 (that is, a reference operating condition) is determined.

In this step (S10), first, signals based on an operating condition which indicate the rotation speeds of main shaft 50, gearbox 60, and power generator 70, the power generation amount of power generator 70, the yaw rotation speed of nacelle 30, wind velocity, and the like are input from an operating monitoring device (not shown) and sensors to data collection device 92 of the monitoring system. Then, an operating condition in which the rotation speeds, the power generation amount, the yaw rotation speed, and the wind velocity described above are within predetermined ranges is determined as a reference operating condition. This reference operating condition may be met for example when wind turbine 10 is generating the rated output. Such information is saved in server 101 on Internet 102.

Next, learning mode operating is performed as step (S20). In this step (S20), referring to Fig. 1, acoustic data produced by the operation of the apparatuses (main shaft 50, gearbox 60, power generator 70, and main bearing 80) during normal operating is obtained by microphones 90, 91 arranged inside nacelle 30. This acoustic data is obtained only in a case where the operating condition of wind turbine 10 matches the reference operating condition determined in (S10). Thereby, a reference value (threshold value) of the acoustic data is determined under the reference operating condition. Such information is saved in server 101 on Internet 102, and the reference value (threshold value) is determined by server 101.

Next, operational mode operating is performed as step (S30). In this step (S30), referring to Figs. 1 and 2, acoustic data produced by the operation of the apparatuses (main shaft 50, gearbox 60, power generator 70, and main bearing 80) when wind turbine 10 is operating is periodically obtained by microphones 90, 91 arranged inside nacelle 30. Then, the acoustic data input from data collection device 92 is saved in server 101 on Internet 102, compared with the reference value (threshold value) and diagnosed by server 101, and displayed and monitored on monitoring terminal 100. Further, only in the case where the operating condition of wind turbine 10 matches the reference operating condition determined in (S10), the obtained acoustic data is compared with the reference value determined in (S20). Then, in a case where the obtained acoustic data exceeds the reference value (threshold value) (for example, in a case where the obtained effective value or frequency spectrum value exceeds the effective value or frequency spectrum value serving as the reference value), an alarm is sent from server 101 on Internet 102 to monitoring terminal 100 ("YES" in Fig. 3). On the other hand, in a case where the obtained acoustic data does not exceed the reference value (for example, in a case where the obtained effective value or frequency spectrum value does not exceed the effective value or frequency spectrum value serving as the reference value), monitoring of the apparatuses of wind turbine 10 is continued ("NO" in Fig. 3). Thereby, the states of the apparatuses of wind turbine 10 are diagnosed.

As described above, in the monitoring method in accordance with the present embodiment, the reference operating condition of wind turbine 10 is determined first (S10), the reference value (threshold value) of the acoustic data produced by the operation of the apparatuses is determined under the reference operating condition (S20), and the acoustic data obtained in the case where the operating condition of wind turbine 10 matches the reference operating condition is compared with the reference value. Thereby, the acoustic data produced by the operation of the apparatuses can be compared, with the operating condition of wind turbine 10 being kept constant. Therefore, even when the acoustic data produced by the operation of the apparatuses are obtained by microphones 90, 91 in a wide range, it is possible to suppress a change in the operating condition of wind turbine 10 from acting as a noise in diagnosing the states of the apparatuses. As a result, the states of the apparatuses can be diagnosed with higher accuracy. Therefore, according to the monitoring method in accordance with the present embodiment, the states of the apparatuses of wind turbine 10 can be diagnosed with higher accuracy.

### (Second Embodiment)

Next, a second embodiment as another embodiment of the present invention will be described. Basically, a monitoring system for a wind turbine in accordance with the present embodiment has the same configuration, is used in the same way, and exhibits the same effect as those of the first embodiment. However, the monitoring system for the wind turbine in accordance with the present embodiment is different from that of the first embodiment in the configuration of the detection unit.

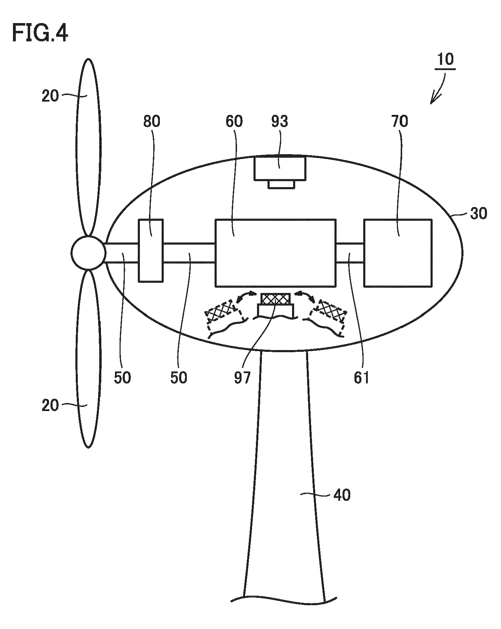

Referring to Figs. 2 and 4, the monitoring system for the wind turbine in accordance with the present embodiment is a device for monitoring damaged and deteriorated states of the apparatuses (main shaft 50, gearbox 60, power generator 70, and main bearing 80) of wind turbine 10, as in the first embodiment. The monitoring system for the wind turbine mainly includes a movable microphone 97 (Fig. 4) arranged inside nacelle 30, a data collection unit which collects obtained sound information and transfers the sound information to a server, a comparison and diagnosis unit which saves such sound information in the server on the Internet, compares the sound information with a reference value (threshold value) and makes diagnosis, and monitoring terminal 100 (Fig. 2) which displays and monitors the result of the diagnosis and is arranged outside nacelle 30.

Microphone 97 (sound collection unit) is a microphone having directivity, and can obtain the acoustic data (sound information) produced by the operation of the apparatuses of wind turbine 10.

Microphone 97 is movable. Microphone 97 can change the direction with respect to the apparatuses by operating a movable portion (dashed lines in Fig. 4). Thereby, the direction in which the directivity of microphone 97 is high can be changed with respect to the apparatuses such as main shaft 50, gearbox 60, power generator 70, and main bearing 80.

As described above, the monitoring system for the wind turbine in accordance with the present embodiment includes microphone 97 which has directivity and is movable such that the direction in which the directivity is high can be changed with respect to the apparatuses. Thereby, the acoustic data produced by the operation of the apparatuses of wind turbine 10 can be obtained by a further less number of sensors. As a result, the cost of the monitoring system can be still further reduced. In addition, the direction of microphone 97 with respect to the apparatuses can be associated with the obtained acoustic data to perform monitoring, and as a result, deteriorated and damaged states of the apparatuses can be diagnosed more reliably.

It should be understood that the embodiments disclosed herein are illustrative and non-restrictive in every respect. The scope of the present invention is defined by the scope of the claims, rather than the description above, and is intended to include any modifications within the scope and meaning equivalent to the scope of the claims.

### INDUSTRIAL APPLICABILITY

The monitoring system and the monitoring method of the present invention are particularly advantageously applicable to a monitoring system for a wind turbine and a monitoring method using the monitoring system for the wind turbine.

### REFERENCE SIGNS LIST

10: wind turbine; 20: blade; 30: nacelle; 40: support column; 50: main shaft; 60: gearbox; 61: output shaft; 70: power generator; 80: main bearing; 90, 91, 97: microphone; 92: data collection device; 93: camera; 94, 95, 96: cable (LAN cable); 100: monitoring terminal; 101: server; 102: Internet.

## Claims

1. A monitoring system for monitoring states of apparatuses of a wind turbine, comprising:
a detection unit arranged inside a housing holding the apparatuses therein to obtain sound information;
a data collection unit which collects the sound information obtained by the detection unit, and transfers the sound information to a server on the Internet;
a comparison and analysis unit which performs comparison with a reference value and analysis, based on the sound information transferred from the data collection unit; and
a monitor terminal which displays and monitors a result of the comparison and analysis by the comparison and analysis unit.

2. The monitoring system according to claim 1, wherein
the wind turbine includes
a main shaft rotated by wind power,
a gearbox connected to the main shaft,
a main bearing arranged adjacent to the gearbox to support the main shaft, and
a power generator connected to the gearbox on a side opposite to the main bearing, and
the detection unit includes
a first detection unit arranged between the main bearing and the gearbox, and
a second detection unit arranged between the gearbox and the power generator.

3. The monitoring system according to claim 1, wherein the detection unit includes a sound collection unit which has directivity, and is movable such that a direction in which the directivity is high can be changed with respect to the apparatuses, to obtain the sound information.

4. The monitoring system according to any one of claims 1 to 3, wherein the wind turbine has a rated output higher than 500 kW.

5. A monitoring method for monitoring states of apparatuses of a wind turbine, comprising the steps of:
determining a reference operating condition which is an operating condition serving as a reference in the wind turbine;
obtaining sound information based on operation of the apparatuses when normal, by a detection unit arranged inside a housing holding the apparatuses therein, and determining a reference value of the sound information, under the reference operating condition; and
obtaining another sound information based on operation of the apparatuses when the wind turbine is operating, by the detection unit, and, in a case where an operating condition of the wind turbine is the reference operating condition, comparing the other sound information with the reference value and diagnosing the states of the apparatuses.
